(19) **Europäisches Patentamt / European Patent Office / Office européen des brevets**

(11) **EP 4 546 875 A1**

(12) **EUROPEAN PATENT APPLICATION**
published in accordance with Art. 153(4) EPC

(43) Date of publication:
**30.04.2025 Bulletin 2025/18**

(21) Application number: **23841735.6**

(22) Date of filing: **21.02.2023**

(51) International Patent Classification (IPC):
**H04W 48/08** (2009.01)

(52) Cooperative Patent Classification (CPC):
**H04W 36/14; H04W 48/02; H04W 48/08;
H04W 48/16; H04W 48/18**

(86) International application number:
**PCT/CN2023/077429**

(87) International publication number:
**WO 2024/016657 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.07.2022 CN 202210843123**

(71) Applicant: **ZTE Corporation
Shenzhen, Guangdong 518057 (CN)**

(72) Inventors:
• **SHANG, Wenke**
  **Shenzhen, Guangdong 518057 (CN)**
• **CHE, Zhonghui**
  **Shenzhen, Guangdong 518057 (CN)**
• **MA, Xiaoliang**
  **Shenzhen, Guangdong 518057 (CN)**

(74) Representative: **Carangelo, Pierluigi et al
Jacobacci & Partners S.p.A.
Via Tomacelli 146
00186 Roma (IT)**

(54) **NETWORK ACCESS METHOD AND APPARATUS, AND COMPUTER-READABLE STORAGE MEDIUM**

(57)     Disclosed in the present application are a network access method and apparatus, and a computer-readable storage medium. The network access method comprises: acquiring a network slice from a WAN-side network, and establishing a link (S100); establishing a slice configuration mapping table corresponding to the network slice (S200); establishing, over an LAN-side network, a local network slice, which is correspondingly linked to the network slice, and a policy route (S300); and according to the local network slice and the policy route, routing service data to the local network slice to which the service data belongs (S400).

Acquire a network slice from a WAN-side network and establish a link — S100

Establish a slice configuration mapping table corresponding to the network slice according to configuration parameter of the network slice — S200

Establish, over a LAN-side network, a local network slice correspondingly linked to the network slice and a policy-based routing according to the slice configuration mapping table — S300

Route service data to the local network slice to which the service data belongs according to the local network slice and the policy-based routing — S400

FIG. 1

## Description

### CROSS-REFERENCE TO RELATED APPLICATION

This application is filed on the basis of Chinese patent application No. 202210843123.6 filed July 18, 2022, and claims priority to the Chinese patent application, the entire contents of which are incorporated herein by reference.

### TECHNICAL FIELD

Embodiments of the present disclosure relate to, but not limited to, the field of network technologies, and more particularly, to a network access method and apparatus, and a computer-readable storage medium.

### BACKGROUND

In the 4th Generation (4G) network era, for all pieces of user equipment and different network access scenarios, data of different services of the same device is transmitted through one channel. Real-time high-definition videos and games with high latency requirements, and latency-insensitive web access all follow the principle of "one runway, best effort". Apparently, in this case, Quality of Service (QoS) of services with different requirements cannot be guaranteed. Low-latency and high-reliability services such as self driving, smart medical care, and industrial control have higher requirements for QoS, and if priorities of the services are not distinguished in the network, many problems will arise.

5th Generation (5G) technologies provide a network slicing technology, i.e., an operator logically divides a network to logically isolate resources from services. Each network slice is an isolated end-to-end network, having its own unique bandwidth, latency, throughput and other characteristics. Service data of different levels may be transmitted on network slices of different logical levels, to meet the differentiated requirements of different service scenarios on the data transmission rate, security, reliability, and other aspects of the network. However, network slicing is not implemented in 5G Customer Premise Equipments (CPEs), i.e., 5G CPEs cannot provide differentiated services according to bandwidth and latency requirements of different services, and services still need to contend for resources. The isolation of 5G network slices and differentiated QoS cannot be achieved, and the advantages of network slicing in 5G networks cannot be brought into full play.

### SUMMARY

The following is a summary of the subject matter set forth in this description. This summary is not intended to limit the scope of protection of the claims.

Embodiments of the present disclosure provide a network access method and apparatus, and a computer-readable storage medium.

In accordance with a first aspect of the present disclosure, an embodiment provides a network access method, including: acquiring a network slice from a WAN-side network and establishing a link; establishing a slice configuration mapping table corresponding to the network slice according to a configuration parameter of the network slice; establishing, over a LAN-side network, a local network slice correspondingly linked to the network slice and a policy-based routing according to the slice configuration mapping table; and routing service data to the local network slice to which the service data belongs according to the local network slice and the policy-based routing.

In accordance with a second aspect of the present disclosure, an embodiment provides a network access apparatus, including: a WAN module configured for connecting to a WAN-side network to acquire a network slice and establish a link; a slice configuration mapping module configured for establishing a slice configuration mapping table corresponding to the network slice; a LAN module configured for establishing, over a LAN-side network, a local network slice correspondingly linked to the network slice according to the slice configuration mapping table; and a policy-based routing module configured for routing service data to the local network slice to which the service data belongs according to the slice configuration mapping table.

In accordance with a third aspect of the present disclosure, an embodiment provides an electronic device, including: a memory, a processor, and a computer program stored in the memory and executable by the processor, where the computer program, when executed by the processor, causes the processor to implement the network access method in accordance with the first aspect.

In accordance with a fourth aspect of the present disclosure, an embodiment provides a computer-readable storage medium, storing a computer-executable program which, when executed by a processor, causes the processor to implement the network access method in accordance with the first aspect.

Additional features and advantages of the present disclosure will be set forth in the description which follows, and in part will be apparent from the description, or may be learned by the practice of the present disclosure. The objects and other advantages of the present disclosure can be realized and obtained by the structures particularly pointed out in the description, claims and drawings.

## BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

FIG. 1 is a main flowchart of a network access method according to an embodiment of the present disclosure;

FIG. 2 is a schematic diagram of a network connection according to an embodiment of the present disclosure;

FIG. 3 is a detailed flowchart of acquiring a network slice from a WAN-side network according to an embodiment of the present disclosure;

FIG. 4 is a detailed flowchart of establishing a local network slice according to an embodiment of the present disclosure;

FIG. 5 is a detailed flowchart of performing bandwidth allocation for the local network slice according to an embodiment of the present disclosure;

FIG. 6 is another detailed flowchart of performing bandwidth allocation for the local network slice according to an embodiment of the present disclosure;

FIG. 7 is still another detailed flowchart of performing bandwidth allocation for the local network slice according to an embodiment of the present disclosure;

FIG. 8 is a detailed flowchart of establishing a policy-based routing according to an embodiment of the present disclosure;

FIG. 9 is a schematic structural diagram of a network access apparatus according to an embodiment of the present disclosure; and

FIG. 10 is a schematic structural diagram of an electronic device according to an embodiment of the present disclosure.

## DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

It should be understood that in the description of the embodiments of the present disclosure, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first" and "second" are merely used for distinguishing technical features, and are not intended to indicate or imply relative importance, or implicitly point out the number of the indicated technical features, or implicitly point out the order of the indicated technical features.

Embodiments of the present disclosure provide a network access method and apparatus, and a computer-readable storage medium. The method includes: first acquiring a network slice from a WAN-side network and establishing a link; establishing a slice configuration mapping table corresponding to the network slice according to a configuration parameter of the network slice; establishing, over a LAN-side network, a local network slice correspondingly linked to the network slice and a policy-based routing according to the slice configuration mapping table; and routing service data to the local network slice to which the service data belongs according to the local network slice and the policy-based routing. Based on this, by mapping the isolation and high reliability of the WAN-side network slice to the LAN-side network in the present disclosure, differentiated QoS can be provided for services in the LAN-side network as required in the case of limited resources, such that the services in the LAN-side network exclusively occupy their own network resources, thereby avoiding unsatisfactory QoS caused by resource contention and solving the problem that 5G network slicing technology cannot effectively exert its value according to service requirements on the LAN side.

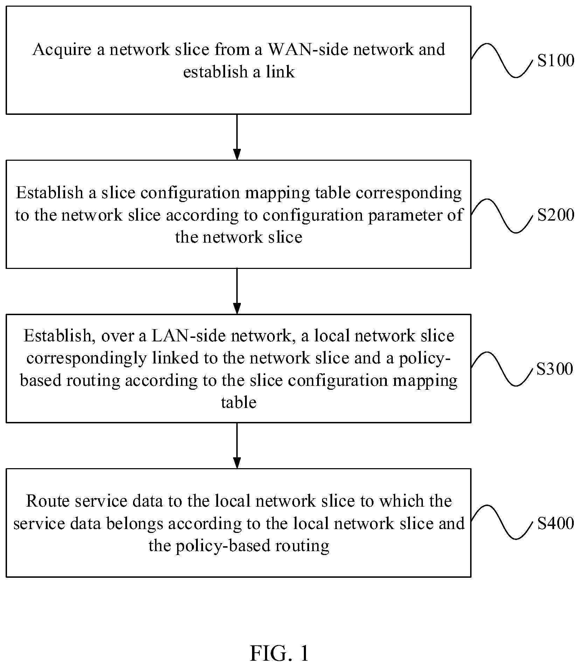

FIG. 1 is a flowchart of a network access method according to an embodiment of the present disclosure. The network access method includes, but not limited to, the following steps.

In a step of S 100, a network slice is acquired from a WAN-side network and a link is established.

In a step of S200, a slice configuration mapping table corresponding to the network slice is established according to a configuration parameter of the network slice.

In a step of S300, a local network slice correspondingly linked to the network slice and a policy-based routing are established over a LAN-side network according to the slice configuration mapping table.

In a step of S400, service data is routed to the local network slice to which the service data belongs according to the local network slice and the policy-based routing.

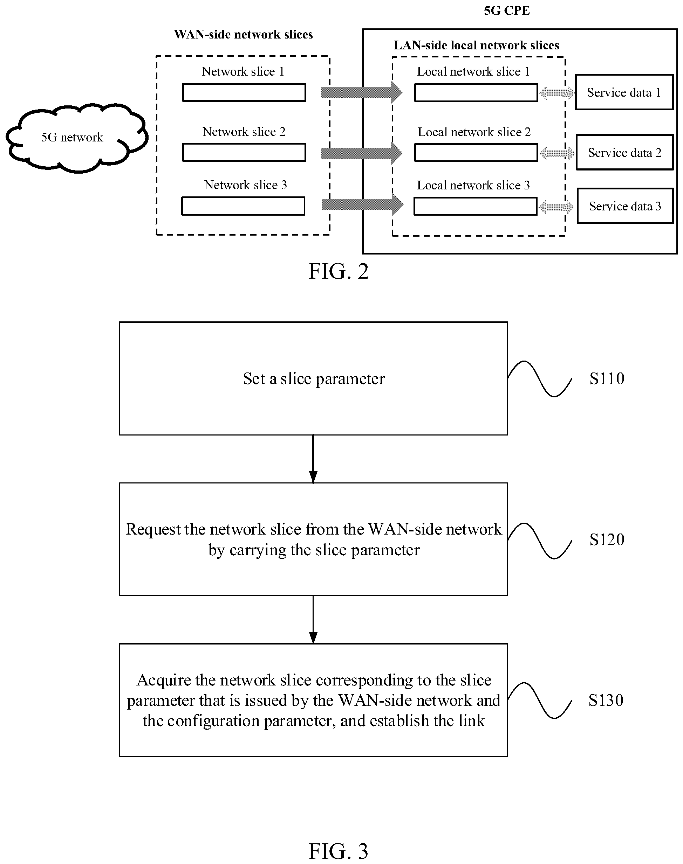

It can be understood that a 5G network has the characteristics of enhanced Mobile Broadband (eMBB), Ultra Reliable Low Latency Communications (uRLLC), and massive Machine Type Communications (mMTC), and can realize end-to-end network slicing. In this technical scheme, first, a network slice is acquired from a WAN-side network, i.e., a 5G network is accessed from a wireless access network, a network slice is acquired from a 5G core network, and a link to the 5G core network is established. The network slice acquired from the 5G core network includes configuration information. A slice configuration mapping table corresponding to the network slice is established according to configuration parameter information of the network slice. The slice configuration mapping table includes a configuration parameter respectively corresponding to the network slice. The configuration parameter is issued by the 5G core network. Then, a local network slice correspondingly linked to the network slice is established over a LAN-side network according to the established slice configuration mapping table, i.e., the local network slice of the LAN-side network and the network slice of the WAN-side network are mapped to each other and use the same slice configuration parameter. In addition, the local network slice of the LAN-side network is correspondingly connected to the network slice of the WAN-side network, i.e., each local network slice of the LAN-side network and the corresponding network slice of the WAN-side network constitute an independent slice resource, and the service data is transmitted to the corresponding network slice of the WAN-side network through the corresponding local network slice of the LAN-side network. A policy-based routing is established in the LAN-side network according to the slice configuration parameter of the slice configuration mapping table, and the service data is routed to the local network slice to which the service data belongs. The service data corresponds to the network slice, i.e., different service data respectively belongs to corresponding network slice. Therefore, the policy-based routing is established to extend the correspondence between service data and the network slice to a correspondence between service data and the local network slice, i.e., a continuous correspondence between service data and the local network slice and between the local network slice and the network slice is established to route the service data to the corresponding local network slice. The service data is then transmitted to the network slice of the WAN-side network through the local network slice, thus forming an extension of the 5G network slicing technology in the LAN-side network. As shown in FIG. 2, in this embodiment, the WAN-side network includes three network slices, namely, a network slice 1, a network slice 2, and a network slice 3, and the local network slices established in the LAN-side network include three local network slices, namely, a local network slice 1, a local network slice 2, and a local network slice 3. The local network slice 1 is linked to the network slice 1, the local network slice 2 is linked to the network slice 2, and the local network slice 3 is linked to the local network slice 3. Therefore, the local network slice established in the LAN-side network form a mapping of the network slice of the WAN-side network to the LAN-side network. In addition, service data 1 is routed to the local network slice 1 to which it belongs, service data 2 is routed to the local network slice 2 to which it belongs, and service data 3 is routed to the local network slice 3 to which it belongs. In this embodiment, the local network slice established in the LAN-side network are applied to a 5G CPE, thus forming an extension of the network slice of the 5G network on the 5G CPE, such that services on the 5G CPE exclusively occupy their own network resources and do not need to contend for network resources. According to this technical scheme, by mapping the isolation and high reliability of the WAN-side network slice to the LAN-side network, differentiated QoS can be provided for services in the LAN-side network as required in the case of limited resources, such that the services in the LAN-side network exclusively occupy their own network resources, thereby avoiding unsatisfactory QoS caused by resource contention and solving the problem that 5G network slicing technology cannot effectively exert its value according to service requirements in the LAN-side network.

As shown in FIG. 3, S100 further includes, but not limited to, the following steps.

In a step of S110, a slice parameter is set.

In a step of S120, the network slice is requested from the WAN-side network by carrying the slice parameter.

In a step of S130, the network slice corresponding to the slice parameter which is issued by the WAN-side network and the configuration parameter are acquired, and the link is established.

It can be understood that acquiring a network slice from a WAN-side network and establishing a link includes: setting a slice parameter; requesting the network slice from the WAN-side network by carrying the slice parameter; and acquiring the network slice corresponding to the slice parameter which is issued by the WAN-side network and the configuration parameter, and establishing the link. In some embodiments, slice setting is performed according to a relevant parameter of a network slice provided by an operator, where a set parameter is a network slice parameter visible to users permitted by the operator, such as an Access Point Name (APN), an Internet Protocol version 4 (IPv4) address, an Internet Protocol version 6 (IPv6) address, etc., and may also include an account, a password, and other information used by the user to access the network. After the slice parameter of the network slice is set, the set network slice parameter is saved. Certainly, parameters of multiple groups of network slices may be set and saved. A dialing request carrying the set network slice parameters is initiated. Upon receiving the dialing request, the 5G network allocates corresponding the network slice by using the network slice parameters carried in the signaling as network slice identifiers, and establishes multiple links. These network slices have different characteristics in terms of bandwidth, latency, and the like. It can be understood that each network slice corresponds to one link.

It can be understood that the slice configuration mapping table includes a bandwidth parameter and a latency parameter. For example, multiple network slices (for example, four network slices) are acquired from the 5G network, i.e., from the WAN-side network. Bandwidth parameters of the network slices are respectively, 100M, 500M, 1G, and 2G, respectively corresponding to latency parameters of 100 ms, 50 ms, 10 ms, and 5 ms. Therefore, different network slices are configured with different bandwidth parameters and latency parameters, and different services can access different network slice resources according to their respective requirements, thereby meeting the personalized needs of the services while ensuring the full and reasonable utilization of 5G network resources. The bandwidth parameter and the latency parameter corresponding to each of the network slices of the WAN-side network are established in the slice configuration mapping table. A network resource status of each slice can be defined according to the two parameters. Certainly, the slice configuration mapping table may also include a throughput parameter, i.e., a throughput that a network slice can carry. In this embodiment, the slice configuration mapping table includes a bandwidth parameter and a latency parameter.

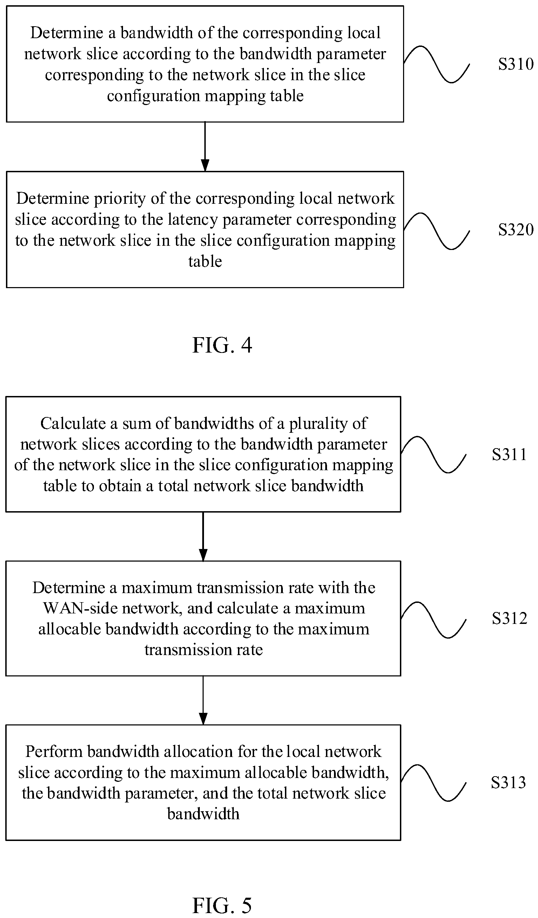

As shown in FIG. 4, S300 further includes, but not limited to, the following steps.

In a step of S310, a bandwidth of the corresponding local network slice is determined according to the bandwidth parameter corresponding to the network slice in the slice configuration mapping table.

In a step of S320, a priority of the corresponding local network slice is determined according to the latency parameter corresponding to the network slice in the slice configuration mapping table.

It can be understood that in the process of establishing, over a LAN-side network, a local network slice correspondingly linked to the network slice according to the slice configuration mapping table, a bandwidth of the corresponding local network slice is determined according to the bandwidth parameter corresponding to the network slice in the slice configuration mapping table, such that the bandwidth of the local network slice of the LAN-side network is respectively consistent with the bandwidth of the corresponding network slice of the WAN-side network. The bandwidth of the local network slice of the LAN-side network and the bandwidth of the corresponding network slice of the WAN-side network may respectively has the same value, may be in a proportional relationship, or may satisfy a mathematical relation, i.e., the bandwidth of the local network slice of the LAN-side network and the bandwidth of the network slice of the WAN-side network maintain a corresponding numerical relationship. A priority of the corresponding local network slice is determined according to the latency parameter corresponding to the network slice in the slice configuration mapping table. As described above, the parameters of each network slice include a bandwidth parameter and a latency parameter. The latency parameter is a minimum latency that the network slice can achieve. Different service data have different requirements on the latency. For example, low-latency and high-reliability services such as self driving, smart medical care, and industrial control have very high requirements on the latency, because such services are related to life safety, production safety, property safety, etc., and require real-time response. Therefore, the latency parameter is a key parameter of the network slice. For the determining of a priority of the corresponding local network slice according to the latency parameter corresponding to the network slice in the slice configuration mapping table, apparently, service data having a higher latency requirement requires a higher priority, so the network slice with a smaller latency parameter value should have a higher priority. The priority of the network slice may be defined by the latency parameter. Parameter of the local network slice of the LAN-side network corresponds to parameter of the network slice of the WAN-side network, i.e., the bandwidth parameter and the latency parameter of the local network slice of the LAN-side network are set based on the bandwidth parameter and the latency parameter of the corresponding network slice of the WAN-side network, such that the latency of the local network slice of the LAN-side network is respectively consistent with the latency of the corresponding network slice of the WAN-side network. The latency of the local network slice of the LAN-side network and the latency of the corresponding network slice of the WAN-side network may respectively has the same value, may be in a proportional relationship, or may satisfy a mathematical relation, i.e., the latency of the local network slice of the LAN-side network and the latency of the network slice of the WAN-side network maintain a corresponding numerical relationship.

As shown in FIG. 5, S310 further includes, but not limited to, the following steps.

In a step of S311, a sum of bandwidths of a plurality of network slices is calculated according to the bandwidth parameter of the network slice in the slice configuration mapping table to obtain a total network slice bandwidth.

In a step of S312, a maximum transmission rate with the WAN-side network is determined, and a maximum allocable bandwidth is calculated according to the maximum transmission rate.

In a step of S313, bandwidth allocation is performed for the local network slice according to the maximum allocable bandwidth, the bandwidth parameter, and the total network slice bandwidth.

It can be understood that in the process of determining a bandwidth of the corresponding local network slice according to the bandwidth parameter corresponding to the network slice in the slice configuration mapping table, a total network slice bandwidth of a plurality of network slices of the WAN-side network is calculated according to the bandwidth parameter of the network slice in the slice configuration mapping table. For example, if the bandwidths of the network slice 1, the network slice 2, the network slice 3, and the network slice 4 are respectively defined as BW1, BW2, BW3, and BW4, a total bandwidth of the network slices is BW=BW1+BW2+BW3+BW4. A maximum transmission rate with the WAN-side network is determined. Because the maximum transmission rate of the WAN-side network is influenced by many factors, such as a 5G network signal coverage status at the location, surrounding buildings, signal interference, and even climate change. Such factors affect the maximum transmission rate with the 5G network, i.e., the WAN-side network, leading to a difference between a theoretical transmission capability and an actual transmission capability. The maximum transmission rate determines how much bandwidth the network can provide. A maximum allocable bandwidth is calculated according to the maximum transmission rate. For example, a theoretical maximum transmission rate of the WAN-side network is 1 G/s. However, because there are load-bearing walls of a building nearby and a large number of metal materials surrounding it, network signals of the 5G wireless network are weakened, and the original maximum transmission rate of 1 G/s of the WAN-side network is attenuated to a maximum transmission rate of 500 M/s, so the maximum allocable bandwidth that the WAN-side network can provide is 500M. Therefore, when the maximum transmission rate of the WAN-side network is attenuated to 500 M/s, i.e., the maximum allocable bandwidth is 500M, the network bandwidth that the LAN-side network can provide is also attenuated accordingly. Therefore, bandwidth resources of the LAN-side network need to be allocated in consideration of the maximum transmission rate and the maximum allocable bandwidth of the WAN-side network, i.e., bandwidth allocation is performed for the local network slice according to the maximum allocable bandwidth of the WAN-side network, the network slice bandwidth, and the total network slice bandwidth. If bandwidth allocation is performed for the local network slice of the LAN-side network not according to the maximum allocable bandwidth of the WAN-side network, the network slice bandwidth, and the total network slice bandwidth, but according to requirements of service data of the LAN-side network, the actual data transmission will be limited by the maximum transmission rate of the WAN-side network, and even if the LAN-side network allocates a high bandwidth to the local network slice corresponding to the service data, the bandwidth service provided still cannot reach a required QoS level, failing to bring the advantages of the 5G network slicing technology into full play.

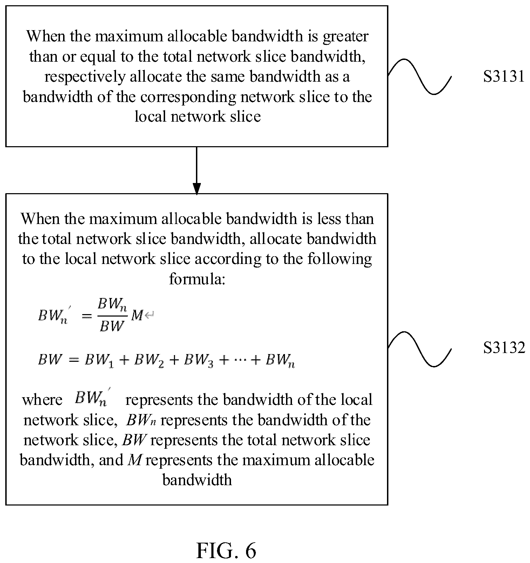

As shown in FIG. 6, S313 further includes, but not limited to, the following steps.

At S3131, when the maximum allocable bandwidth is greater than or equal to the total network slice bandwidth, the same bandwidth as bandwidth of the corresponding network slice is allocated to the local network slice.

At S3132, when the maximum allocable bandwidth is less than the total network slice bandwidth, a bandwidth is allocated to the local network slice according to the following formula:

$$BW_n' = \frac{BW_n}{BW}M$$

$$BW = BW_1 + BW_2 + BW_3 + \cdots + BW_n$$

where $BW_n'$ represents the bandwidth of the local network slice, $BW_n$ represents the bandwidth of the network slice, $BW$ represents the total network slice bandwidth, and $M$ represents the maximum allocable bandwidth.

It can be understood that in the process of performing bandwidth allocation for the local network slice according to the maximum allocable bandwidth, the network slice bandwidth, and the total network slice bandwidth, when the maximum allocable bandwidth is greater than or equal to the total network slice bandwidth, the same bandwidth as bandwidth of the corresponding network slice is allocated to the local network slice. For example, the network slice 1, the network slice 2, the network slice 3, and the network slice 4 are acquired from the WAN-side network, and bandwidths corresponding to the network slice 1, the network slice 2, the network slice 3, and the network slice 4 are respectively 100M, 500M, 1G, and 2G, so a total bandwidth of the network slices is 100M+500M+1G+2G=3.586G G, i.e., a maximum bandwidth that the network slices can provide is 3.586G. In this case, the maximum transmission rate of the WAN-side network is 4 G/s, i.e., the maximum allocable bandwidth of the WAN-side network is 4G. Because the maximum allocable bandwidth of the WAN-side network is 4G, which is greater than the maximum bandwidth of 3.586G of the network slices, network quality of the WAN-side network can fully guarantee bandwidth requirement of the network slice. Therefore, in the case of sufficient bandwidth resources, the same bandwidth as a bandwidth of the corresponding network slice is respectively allocated to the local network slice, i.e., the bandwidths allocated to the local network slice 1, the local network slice 2, the local network slice 3, and the local network slice 4 are respectively 100M, 500M, 1G, and 2G.

When the maximum allocable bandwidth is less than the total network slice bandwidth, a bandwidth is allocated to the local network slice according to the following formula:

$$BW_n' = \frac{BW_n}{BW} M$$

$$BW = BW_1 + BW_2 + BW_3 + \cdots + BW_n$$

where $BW_n'$ represents the bandwidth of the local network slice, $BW_n$ represents the bandwidth of the network slice, $BW$ represents the total network slice bandwidth, and $M$ represents the maximum allocable bandwidth.

It can be understood that when the maximum allocable bandwidth is less than the total network slice bandwidth, the maximum transmission rate of the WAN-side network cannot meet the bandwidth requirement of the network slice. For example, the network slice 1, the network slice 2, the network slice 3, and the network slice 4 are acquired from the WAN-side network, and bandwidths corresponding to the network slice 1, the network slice 2, the network slice 3, and the network slice 4 are respectively 100M, 500M, 1G, and 2G, so a total bandwidth of the network slices is 100M+500M+1G+2G=3.586G G, i.e., a maximum bandwidth that the network slices can provide is 3.586G. In this case, the maximum transmission rate of the WAN-side network is 2 G/s, i.e., the maximum allocable bandwidth of the WAN-side network is 2G. Because the maximum allocable bandwidth of the WAN-side network is 2G, which is less than the maximum bandwidth of 3.586G of the network slice, the transmission rate of the WAN-side network cannot meet the bandwidth requirement of the network slice. If the bandwidth is still allocated to the local network slice according to the bandwidth of the network slice, for example, if the bandwidths corresponding to the network slice 1, the network slice 2, the network slice 3, and the network slice 4 are respectively 100M, 500M, 1G, and 2G, and the bandwidths allocated to the local network slice 1, the local network slice 2, the local network slice 3, and the local network slice 4 are respectively 100M, 500M, 1G, and 2G, the total bandwidth of the local network slices is 100M+500M+1G+2G=3.586G, which exceeds the maximum allocable bandwidth of the WAN-side network, because the maximum allocable bandwidth of the WAN-side network is 2G and cannot meet the total bandwidth of 3.586G of the local network slice, the local network slice cannot provide network service according to the allocated bandwidth even if sufficient bandwidth has been allocated to the local network slice. As a result, the advantages of 5G network slicing cannot be brought into full play, and the service effect and the service stability are affected. Therefore, when the maximum allocable bandwidth is less than the total network slice bandwidth, the bandwidth to be allocated to the local network slice is scaled down. In some embodiments, a scale-down ratio for the bandwidth to be allocated is calculated according to a ratio of the maximum allocable bandwidth to the total network slice bandwidth. For example, the bandwidths corresponding to the network slice 1, the network slice 2, the network slice 3, and the network slice 4 are respectively 100M, 500M, 1G, and 2G, the total bandwidth of the network slices is 100M+500M+1G+2G=3.586G, and the maximum transmission rate of the WAN-side network is 2 G/s, i.e., the maximum allocable bandwidth of the WAN-side network is 2G. In this case, the ratio of the maximum allocable bandwidth to the total network slice bandwidth is 2/3.586=0.558, i.e., the bandwidth to be allocated to the local network slice is reduced according to the ratio of 0.555. To be specific, the bandwidth to be allocated to the local network slice 1 is reduced to 100M×0.558=55.8M, the bandwidth to be allocated to the local network slice 2 is reduced to 500M×0.558=279M, the bandwidth to be allocated to the local network slice 3 is reduced to 1G×0.558=0.558G, and the bandwidth to be allocated to the local network slice 4 is reduced to 2G×0.558=1.116G. After the bandwidth to be allocated to the local network slice is reduced according to the ratio of 0.558, a total bandwidth requirement of services on the local network slices is 0.558M+279M+0.558G+1.116G=1.947G. As long as it is ensured that the bandwidth requirement of the local network slice does not exceed the maximum allocable bandwidth of 2G of the WAN-side network, 5G network slice services can be stably provided.

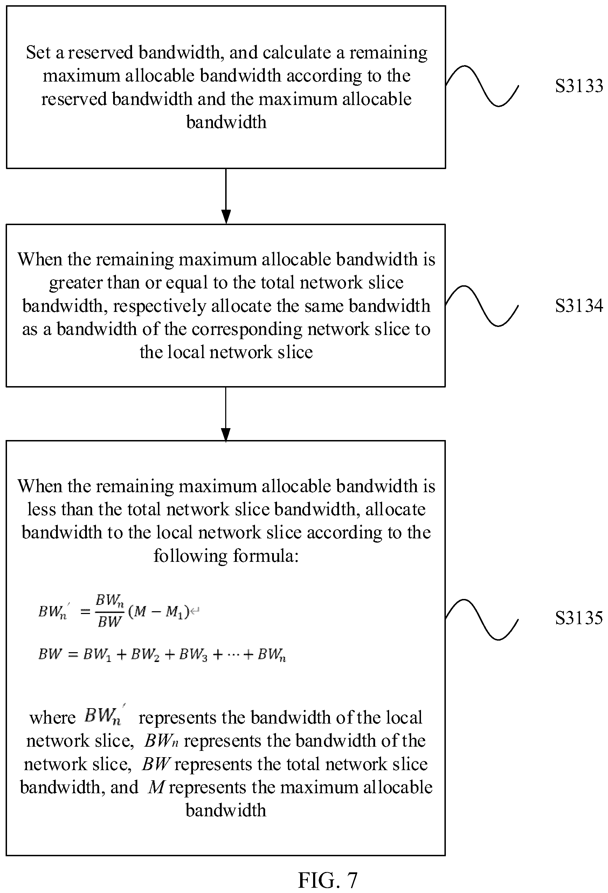

As shown in FIG. 7, S313 may further include, but not limited to, the following steps.

In a step of S3133, a reserved bandwidth is set, and a remaining maximum allocable bandwidth is calculated according to the reserved bandwidth and the maximum allocable bandwidth.

In a step of S3134, when the remaining maximum allocable bandwidth is greater than or equal to the total network slice bandwidth, the same bandwidth as a bandwidth of the corresponding network slice is allocated to the local network slice.

In a step of S3135, when the remaining maximum allocable bandwidth is less than the total network slice bandwidth, the bandwidth is allocated to the local network slice according to the following formula:

$$BW_n' = \frac{BW_n}{BW}(M - M_1)$$

$$BW = BW_1 + BW_2 + BW_3 + \cdots + BW_n$$

where $BW_n'$ represents the bandwidth of the local network slice, $BW_n$ represents the bandwidth of the network slice, $BW$ represents the total network slice bandwidth, $M_1$ represents the reserved bandwidth, and $M$ represents the maximum allocable bandwidth.

It can be understood that in the process of performing bandwidth allocation for the local network slice according to the maximum allocable bandwidth, the network slice bandwidth, and the total network slice bandwidth, when the maximum allocable bandwidth is greater than or equal to the total network slice bandwidth, the same bandwidth as a bandwidth of the corresponding network slice is allocated to the local network slice. In this embodiment, the reserved bandwidth is for network services which are non-slicing services, i.e., for some services that do not have special network bandwidth and latency requirements, such as browsing news pages, browsing novel pages, etc. Such network services have a low bandwidth requirement and very high tolerance for the latency, and can be implemented with the reserved bandwidth without requiring a slice network. For example, the network slice 1, the network slice 2, the network slice 3, and the network slice 4 are acquired from the WAN-side network, and bandwidths corresponding to the network slice 1, the network slice 2, the network slice 3, and the network slice 4 are respectively 100M, 500M, 1G, and 2G, so a total bandwidth of the network slices is 100M+500M+1G+2G=3.586G, i.e., a maximum bandwidth that the network slices can provide is 3.586G. In this case, the maximum transmission rate of the WAN-side network is 5 G/s, i.e., the maximum allocable bandwidth of the WAN-side network is 5G. The reserved bandwidth is set to 1G, so the remaining maximum allocable bandwidth is 5G-1G=4G, and the remaining maximum transmission rate of the WAN-side network is 4 G/s. Because the remaining maximum allocable bandwidth of the WAN-side network is 4G, which is greater than the maximum bandwidth of 3.586G of the network slices, network quality of the WAN-side network can fully guarantee the bandwidth requirement of the network slice. Therefore, in the case of sufficient bandwidth resources, the reserved bandwidth is set to 1G, and the same bandwidth as a bandwidth of the corresponding network slice is respectively allocated to the local network slice, i.e., the bandwidths allocated to the local network slice 1, the local network slice 2, the local network slice 3, and the local network slice 4 are respectively 100M, 500M, 1G, and 2G.

When the remaining maximum allocable bandwidth is less than the value of the total network slice bandwidth, the maximum allocable bandwidth of the WAN-side network cannot meet the bandwidth requirement of the network slice. For example, the network slice 1, the network slice 2, the network slice 3, and the network slice 4 are acquired from the WAN-side network, and bandwidths corresponding to the network slice 1, the network slice 2, the network slice 3, and the network slice 4 are respectively 100M, 500M, 1G, and 2G, so a total bandwidth of the network slices is 100M+500M+1G+2G=3.586G G, i.e., a maximum bandwidth that the network slices can provide is 3.6G. In this case, the maximum transmission rate of the WAN-side network is 3 G/s, i.e., the maximum allocable bandwidth of the WAN-side network is 3G. The reserved bandwidth is set to 1G, so the remaining maximum transmission rate is 2 G/s, i.e., the remaining maximum allocable bandwidth is 2G. Because the remaining maximum allocable bandwidth of the WAN-side network is 2G, which is less than the maximum bandwidth of 3.586G of the network slices, the remaining maximum allocable bandwidth of the WAN-side network cannot meet the bandwidth requirement of the network slice. If the bandwidth is still allocated to the local network slice according to the bandwidth of the network slice, for example, if the bandwidths corresponding to the network slice 1, the network slice 2, the network slice 3, and the network slice 4 are respectively 100M, 500M, 1G, and 2G, and the bandwidths allocated to the local network slice 1, the local network slice 2, the local network slice 3, and the local network slice 4 are respectively 100M, 500M, 1G, and 2G, the total bandwidth of the local network slices is 100M+500M+1G+2G=3.586G, which exceeds the remaining maximum allocable bandwidth of the WAN-side network, because the remaining maximum allocable bandwidth of the WAN-side network is 2G and cannot meet the total bandwidth of 3.586G of the local network slices, the local network slices cannot provide network services according to the allocated bandwidths even if sufficient bandwidth has been allocated to the local network slices. As a result, the advantages of 5G network slicing cannot be brought into full play, and the service effect and the service stability are affected. Therefore, when the remaining maximum allocable bandwidth is less than the total network slice bandwidth, the bandwidth to be allocated to the local network slice is scaled down. In some embodiments, a scale-down ratio for the bandwidth to be allocated is calculated according to a ratio of the remaining maximum allocable bandwidth to the total network slice bandwidth. For example, the bandwidths corresponding to the network slice 1, the network slice 2, the network slice 3, and the network slice 4 are respectively 100M, 500M, 1G, and 2G, the total bandwidth of the network slices is 100M+500M+1G+2G=3.586G, and the remaining maximum transmission rate of the WAN-side network is 2 G/s. In this case, the ratio of the remaining maximum allocable bandwidth to the total network slice bandwidth is 2/3.586=0.558, i.e., the bandwidth to be allocated to the local network slice is reduced according to the ratio of 0.558. To be specific, the bandwidth to be allocated to the local network slice 1 is reduced to 100M×0.558=55.8M, the bandwidth to be allocated to the local network slice 2 is reduced to 500M×0.558=279M, the bandwidth to be allocated to the local network slice 3 is reduced to 1G×0.558=0.558G, and the bandwidth to be allocated to the local network slice 4 is reduced to 2G×0.558=1.116G. After the bandwidth to be allocated to the local network slice is reduced according to the ratio of 0.558, a total bandwidth requirement of services on the local network slices is 0.558M+279M+0.558G+1.116G=1.947G. As long as it is ensured that the bandwidth requirement of the local network slices does not exceed the maximum allocable bandwidth of 2G of the WAN-side network, 5G network slice services can be stably provided. Certainly, the size of the reserved bandwidth may be flexibly set as required.

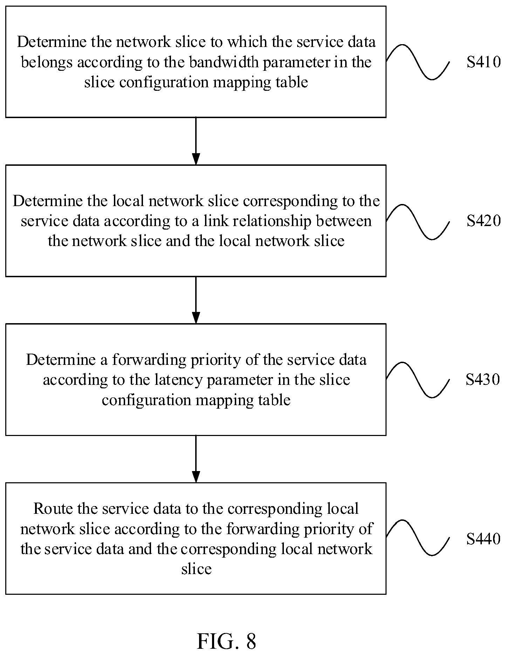

As shown in FIG. 8, S400 may further include, but not limited to, the following steps.

In a step of S410, the network slice to which the service data belongs is determined according to the bandwidth parameter in the slice configuration mapping table.

In a step of S420, the local network slice corresponding to the service data is determined according to a link relationship between the network slice and the local network slice.

In a step of S430, a forwarding priority of the service data is determined according to the latency parameter in the slice configuration mapping table.

In a step of S440, the service data is routed to the corresponding local network slice according to the forwarding priority of the service data and the corresponding local network slice.

It can be understood that the network slice to which the service data belongs is determined according to the bandwidth parameter in the slice configuration mapping table, i.e., the service data is mapped to the corresponding network slice according to the bandwidth required by the service data. Therefore, the network slice to which the service data belongs can be determined according to the bandwidth parameter. The local network slice corresponding to the service data is determined according to a link relationship between the network slice and the local network slice. Because the network slice respectively correspond to the local network slice according to the bandwidth parameter, service data belonging to a network slice also belongs to a local network slice corresponding to the network slice. Therefore, the local network slice providing a network service for the service data can be determined according to bandwidth data. A forwarding priority of the service data is determined according to the latency parameter in the slice configuration mapping table. Because service data having a higher priority has lower tolerance to the latency, i.e., requires a lower latency, the priority of the service data can be determined according to the latency parameter. The service data is routed to the corresponding local network slice according to the forwarding priority of the service data and the corresponding local network slice. For example, service data of e-sports, service data of a news web page, and service data of a live streaming video are accessed on the LAN-side network. The three types of data have different bandwidth requirements and different latency requirements. The service data of e-sports has the lowest tolerance to latency and requires the lowest latency and the highest data forwarding priority. The service data of the live streaming video has the second lowest tolerance to latency. The service data of the news web page has the highest tolerance to latency, and can accept the highest latency. It is assumed that the network slices of the WAN-side network include a network slice 1, a network slice 2, a network slice 3, and a network slice 4, and bandwidths of the network slice 1, the network slice 2, the network slice 3, and the network slice 4 are respectively 100M, 500M, 1G, and 2G, respectively corresponding to latencies of 100 ms, 10 ms, 1 ms, and 0.1 ms. In this case, the service data of e-sports belongs to the network slice 4, the service data of the live streaming video belongs to the network slice 3, and the service data of the news web page belongs to the network slice 1. The service data is routed to the corresponding local network slice according to the forwarding priority of the service data and the corresponding local network slice. The service data of e-sports belongs to a local network slice 4, the service data of the live streaming video belongs to a local network slice 3, the service data of the news web page belongs to a local network slice 1. Therefore, because the latency parameters of the network slice 1, the network slice 3, and the network slice 4 are in an descending order, the priorities of the network slice 1, the network slice 3, and the network slice 4 are in an ascending order, i.e., the service data of e-sports has the highest priority, the service data of the live streaming video has the second highest priority, and the service data of the news web page has the lowest priority. Therefore, by policy-based routing, the service data of e-sports is first routed to the local network slice 4, then the service data of the live streaming video is routed to the local network slice 3, and finally the service data of the news web page is routed to the local network slice 1. As such, the bandwidth requirements and latency requirements of the service data are ensured, and the personalized needs of the service data are satisfied, thereby bringing the advantages of the slicing technology into full play and making full use of network resources.

It can be understood that when the WAN-side network sends the configuration parameter of a new slice, the corresponding configuration parameter in the slice configuration mapping table is updated. When the WAN-side network issues a bandwidth parameter and a latency parameter of a new network slice, the bandwidth parameter and the latency parameter of the corresponding network slice in the slice configuration mapping table are synchronously updated, and at the same time, the bandwidth parameter and the latency parameter of the corresponding local network slice are updated. A maximum transmission rate and a remaining maximum allocable bandwidth of the WAN-side network are obtained through testing. A total network slice bandwidth is calculated. Bandwidth is allocated to the local network slice as required according to value of the maximum transmission rate and the remaining maximum allocable bandwidth of the network, the total network slice bandwidth, and the reserved bandwidth.

The network access method provided in the present disclosure is further described below in conjunction with the accompanying drawings and embodiments.

As shown in FIG. 2, this embodiment is applied to a 5G CPE, i.e., a CPE accesses a 5G network in a wireless mode, and service data is connected to the CPE by wired connection or Wireless Fidelity (WI-FI). Slice setting is performed in the CPE according to a relevant parameter of a network slice provided by an operator, where a set parameter is a network slice parameter visible to users permitted by the operator, such as an APN, an IPv4 address, an IPv6 address, etc., and may also include an account, a password, and other information used by the user to access the network. After the slice parameter of the network slice is set, the CPE saves the set network slice parameter. Certainly, parameters of multiple groups of network slices may be set and saved. The CPE initiates a dialing request carrying the set network slice parameters. Upon receiving the dialing request, the 5G network allocates corresponding network slice to the CPE by using the network slice parameter carried in the signaling as network slice identifier, and establishes multiple links to the CPE. These network slices have different characteristics in terms of bandwidth, latency, and the like. It can be understood that each network slice corresponds to one link.

The network slice acquired from the 5G core network include configuration information. The configuration information includes a bandwidth parameter and a latency parameter. For example, multiple network slices (for example, four network slices) are acquired from the 5G network, i.e., from the WAN-side network. Bandwidth parameters of the network slices are respectively, 100M, 500M, 1G, and 2G, respectively corresponding to latency parameters of 100 ms, 50 ms, 10 ms, and 5 ms. Therefore, different network slices are configured with different bandwidth parameters and latency parameters, and different services can access different network slice resources according to their respective requirements, thereby meeting the personalized needs of the services while ensuring the full and reasonable utilization of 5G network resources.

A slice configuration mapping table corresponding to the network slice is established according to configuration parameter information of the network slice. The slice configuration mapping table includes configuration parameter respectively corresponding to the network slice. In some embodiments, the slice configuration mapping table includes a bandwidth parameter and a latency parameter. The configuration parameter is issued by the 5G core network. Then according to the created slice configuration mapping table. In some embodiments, the slice configuration mapping table includes configuration parameter information, namely, bandwidth parameters and latency parameters, of the four network slices. The bandwidth parameters are respectively 100M, 500M, 1G, and 2G, respectively corresponding to the latency parameters of 100 ms, 50 ms, 1 ms, and 0.1 ms.

In the process of establishing, over a LAN-side network, a local network slice correspondingly linked to the network slice according to the slice configuration mapping table, a bandwidth of the corresponding local network slice is determined according to the bandwidth parameter corresponding to the network slice in the slice configuration mapping table, such that the bandwidth of the local network slice of the LAN-side network is respectively consistent with the bandwidth of the corresponding network slice of the WAN-side network. The bandwidths of the network slice 1, the network slice 2, the network slice 3, and the network slice 4 are respectively 100M, 500M, 1G, and 2G, so the total bandwidth of the network slices is 100M+500M+1G+2G=3.586G. It is assumed that the maximum transmission rate of the WAN-side network is 3 G/s, i.e., the maximum allocable bandwidth of the WAN-side network is 3G. In this embodiment, the reserved bandwidth is set to 1G, so the remaining maximum allocable bandwidth is 2G. Because the remaining maximum allocable bandwidth of the WAN-side network is 2G, which is less than the maximum bandwidth of 3.586G of the network slices, the remaining maximum allocable bandwidth of the WAN-side network cannot meet the bandwidth requirement of the network slice. In this case, the bandwidth to be allocated to the local network slice is scaled down. A scale-down ratio for the bandwidth to be allocated is calculated according to a ratio of the remaining maximum allocable bandwidth to the total network slice bandwidth. In this case, the ratio of the maximum transmission rate to the total network slice bandwidth is 2/3. 586=0.558, i.e., the bandwidth to be allocated to the local network slice is reduced according to the ratio of 0.558. To be specific, the bandwidth to be allocated to the local network slice 1 is reduced to 100M×0.558=55.8M, the bandwidth to be allocated to the local network slice 2 is reduced to 500M×0.558=279M, the bandwidth to be allocated to the local network slice 3 is reduced to 1G×0.558=0.558G, and the bandwidth to be allocated to the local network slice 4 is reduced to 2G×0.558=1.116G. After the bandwidth to be allocated to the local network slice is reduced according to the ratio of 0.558, a total bandwidth requirement of services on the local network slices is 0.558M+279M+0.558G+1.116G=1.947G. As long as it is ensured that the bandwidth requirement of the local network slice does not exceed the maximum allocable bandwidth of 2G of the WAN-side network, 5G network slice services can be stably provided. Certainly, the size of the reserved bandwidth may be flexibly set as required.

The network slice to which the service data belongs is determined according to the bandwidth parameter in the slice configuration mapping table, i.e., the service data is mapped to the corresponding network slice according to the bandwidth required by the service data. Therefore, the network slice to which the service data belongs can be determined according to the bandwidth parameter. The local network slice corresponding to the service data is determined according to a link relationship between the network slice and the local network slice. Because the network slice respectively corresponds to the local network slice according to the bandwidth parameter, service data belonging to a network slice also belongs to a local network slice corresponding to the network slice. Therefore, the local network slice providing a network service for the service data can be determined according to bandwidth data. A forwarding priority of the service data is determined according to the latency parameter in the slice configuration mapping table. Because service data having a higher priority has lower tolerance to the latency, i.e., requires a lower latency, the priority of the service data can be determined according to the latency parameter. The service data is routed to the corresponding local network slice according to the forwarding priority of the service data and the corresponding local network slice. In this embodiment, service data of e-sports, service data of a news web page, and service data of a live streaming video are accessed on the LAN-side network. The three types of data have different bandwidth requirements and different latency requirements. The service data of e-sports has the lowest tolerance to latency and requires the lowest latency and the highest data forwarding priority. The service data of the live streaming video has the second lowest tolerance to latency. The service data of the news web page has the highest tolerance to latency, and can accept the highest latency. Therefore, the bandwidths of the network slice 1, the network slice 2, the network slice 3, and the network slice 4 of the WAN-side network are respectively 100M, 500M, 1G, and 2G, respectively corresponding to latencies of 100 ms, 10 ms, 1 ms, and 0.1 ms. In this case, the service data of e-sports belongs to the network slice 4, the service data of the live streaming video belongs to the network slice 3, and the service data of the news web page belongs to the network slice 1. The service data is routed to the corresponding local network slice according to the forwarding priority of the service data and the corresponding local network slice. The service data of e-sports belongs to a local network slice 4, the service data of the live streaming video belongs to a local network slice 3, the service data of the news web page belongs to a local network slice 1. Therefore, because the latency parameters of the network slice 1, the network slice 3, and the network slice 4 are in an descending order, the priorities of the network slice 1, the network slice 3, and the network slice 4 are in an ascending order, i.e., the service data of e-sports has the highest priority, the service data of the live streaming video has the second highest priority, and the service data of the news web page has the lowest priority. Therefore, by policy-based routing, the service data of e-sports is first routed to the local network slice 4, then the service data of the live streaming video is routed to the local network slice 3, and finally the service data of the news web page is routed to the local network slice 1. As such, the bandwidth requirements and latency requirements of the service data are ensured, and the personalized needs of the service data are satisfied, thereby bringing the advantages of the slicing technology into full play and making full use of network resources.

A local network slice correspondingly linked to the network slice is established over a LAN-side network, i.e., the local network slice of the LAN-side network and the network slice of the WAN-side network are mapped to each other and use the same slice configuration parameter. In addition, the local network slice of the LAN-side network is correspondingly connected to the network slice of the WAN-side network, i.e., each local network slice of the LAN-side network and the corresponding network slice of the WAN-side network constitute an independent slice resource, and the service data is transmitted to the corresponding network slice of the WAN-side network through the corresponding local network slice of the LAN-side network. A policy-based routing is established in the LAN-side network according to the slice configuration parameter of the slice configuration mapping table, and the service data is routed to the local network slice to which the service data belongs.

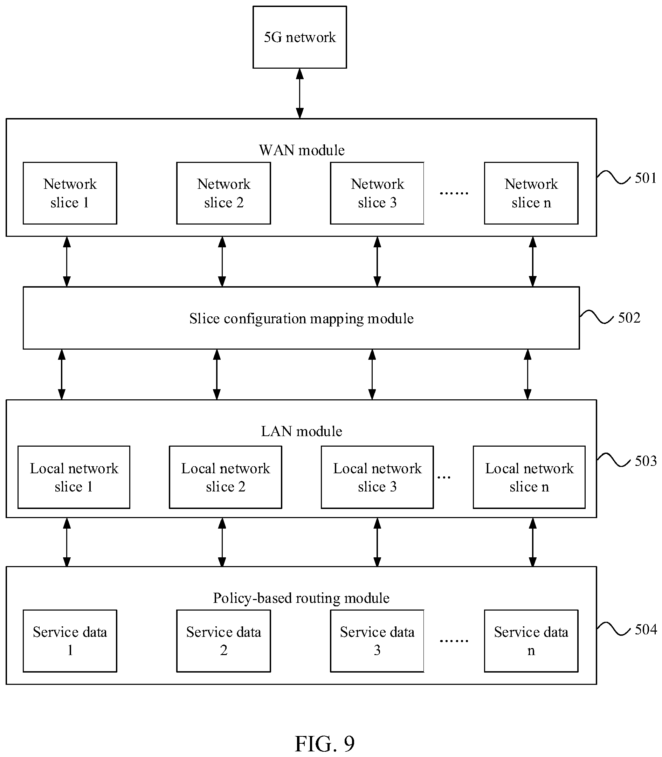

As shown in FIG. 9, an embodiment of the present disclosure provides a network access apparatus, which can acquire a network slice from a WAN-side network and establish a link; establish a slice configuration mapping table corresponding to the network slice according to configuration parameter of the network slice; establish, over a LAN-side network, a local network slice correspondingly linked to the network slice and a policy-based routing according to the slice configuration mapping table; and route service data to the local network slice to which the service data belongs according to the local network slice and the policy-based routing. By mapping the isolation and high reliability of the WAN-side network slice to the LAN-side network, differentiated QoS can be provided for services in the LAN-side network as required in the case of limited resources, such that the services in the LAN-side network exclusively occupy their own network resources, thereby avoiding unsatisfactory QoS caused by resource contention and solving the problem that 5G network slicing technology cannot effectively exert its value according to service requirements on the LAN side.

The network access apparatus includes:

a WAN module 501 configured for connecting to a WAN-side network to acquire a network slice and establish a link;

a slice configuration mapping module 502 configured for establishing a slice configuration mapping table corresponding to the network slice;

a LAN module 503 configured for establishing, over a LAN-side network, a local network slice correspondingly linked to the network slice according to the slice configuration mapping table; and

a policy-based routing module 504 configured for routing service data to the local network slice to which the service data belongs according to the slice configuration mapping table.

In an implementation, acquiring a network slice from a WAN-side network and establishing a link includes: establishing a slice configuration mapping table corresponding to the network slice according to configuration parameter of the network slice; establishing, over a LAN-side network, a local network slice correspondingly linked to the network slice and a policy-based routing according to the slice configuration mapping table; and routing service data to the local network slice to which the service data belongs according to the local network slice and the policy-based routing. Based on this, by mapping the isolation and high reliability of the WAN-side network slice to the LAN-side network, differentiated QoS can be provided for services in the LAN-side network as required in the case of limited resources, such that the services in the LAN-side network exclusively occupy their own network resources, thereby avoiding unsatisfactory QoS caused by resource contention and solving the problem that 5G network slicing technology cannot effectively exert its value according to service requirements on the LAN side.

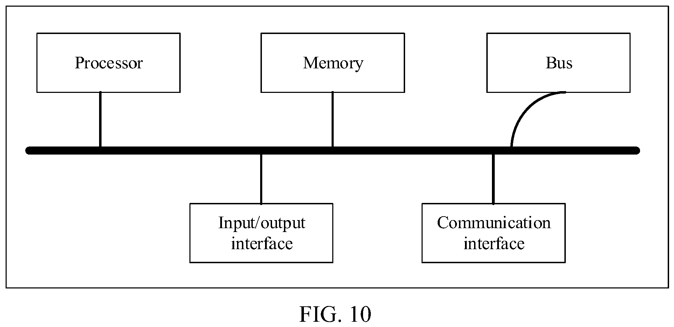

As shown in FIG. 10, an embodiment of the present disclosure provides an electronic device. By mapping the isolation and high reliability of the WAN-side network slice to the LAN-side network, differentiated QoS can be provided for services in the LAN-side network as required in the case of limited resources, such that the services in the LAN-side network exclusively occupy their own network resources, thereby avoiding unsatisfactory QoS caused by resource contention and solving the problem that 5G network slicing technology cannot effectively exert its value according to service requirements on the LAN side.

The electronic device includes a processor, a memory, an input/output interface, a communication interface, and a bus. The processor may be implemented by a general-purpose Central Processing Unit (CPU), a microprocessor, an Application Specific Integrated Circuit (ASIC), or one or more integrated circuits, and is configured for executing a related program to implement the technical schemes provided by the embodiments of the present disclosure.

The memory may be implemented in the form of a Read Only Memory (ROM), a static storage device, a dynamic storage device, a Random Access Memory (RAM), etc. The memory may store an operating system and other application programs. When the technical schemes provided by the embodiments of the present disclosure are implemented by software or firmware, related program code is stored in the memory which, when called by the processor, causes the processor to implement the multimedia data processing method according to the embodiments of the present disclosure.

The input/output interface is configured for enabling input and output of information.

The communication interface is configured to realize communication interaction between the electronic device and other devices, either through wired communication (e.g., USB, network cable, etc.) or through wireless communication (e.g., mobile network, Wi-Fi, Bluetooth, etc.).

The bus is configured to transmit information between components of the electronic device (such as the processor, the memory, the input/output interface, and the communication interface).

The processor, the memory, the input/output interface, and the communication interface are in communication connection with each other inside the electronic device through the bus.

In an implementation, the electronic device includes one or more processors and one or more memories. FIG. 10 uses one processor and one memory as an example. The processor and the memory may be connected by a bus or in other ways. Connection by a bus is used as an example in FIG. 10.

The memory, as a non-transitory computer-readable storage medium, may be configured for storing a non-transitory software program and a non-transitory computer-executable program, for example, the network access method in the embodiments of the present disclosure. The non-transitory software program and the non-transitory computer-executable program stored in the memory, when executed by the processor, cause the processor to implement the network access method in the embodiments of the present disclosure.

The memory may include a program storage area and a data storage area. The program storage area may store an operating system, and an application required by at least one function. The data storage area may store data and the like required for executing the network access method in the embodiments of the present disclosure. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the network access apparatus via a network. Examples of the network include, but not limited to, the Internet, an intranet, a local area network, a mobile communication network, and combinations thereof.

The non-transitory software program and the non-transitory computer-executable program required for implementing the network access method in the embodiments of the present disclosure are stored in the memory, which when executed by one or more processors, cause the one or more processors to implement the network access method in the embodiments of the present disclosure, for example, implement the method steps S100 to S400 in FIG. 1, the method steps S110 to S130 in FIG. 3, the method steps S310 to S320 in FIG. 4, the method steps S311 to S313 in FIG. 5, the method steps S3131 to S3132 in FIG. 6, the method steps S3133 to S3135 in FIG. 7, or the method steps S410 to S440 in FIG. 8. The method includes: acquiring a network slice from a WAN-side network and establishing a link; establishing a slice configuration mapping table corresponding to the network slice according to configuration parameter of the network slice; establishing, over a LAN-side network, a local network slice correspondingly linked to the network slice and a policy-based routing according to the slice configuration mapping table; and routing service data to the local network slice to which the service data belongs according to the local network slice and the policy-based routing. Based on this, by mapping the isolation and high reliability of the WAN-side network slice to the LAN-side network, differentiated QoS can be provided for services in the LAN-side network as required in the case of limited resources, such that the services in the LAN-side network exclusively occupy their own network resources, thereby avoiding unsatisfactory QoS caused by resource contention and solving the problem that 5G network slicing technology cannot effectively exert its value according to service requirements on the LAN side.

In addition, an embodiment of the present disclosure provides a computer-readable storage medium, storing a computer-executable program which, when executed by one or more control processors, for example, by a processor in FIG. 10, may cause the one or more processors to implement the network access method in the embodiments of the present disclosure, for example, implement the method steps S100 to S400 in FIG. 1, the method steps S110 to S130 in FIG. 3, the method steps S310 to S320 in FIG. 4, the method steps S311 to S313 in FIG. 5, the method steps S3131 to S3132 in FIG. 6, the method steps S3133 to S3135 in FIG. 7, or the method steps S410 to S440 in FIG. 8. The method includes: acquiring a network slice from a WAN-side network and establishing the link; establishing a slice configuration mapping table corresponding to the network slice according to configuration parameter of the network slice; establishing, over a LAN-side network, a local network slice correspondingly linked to the network slice and a policy-based routing according to the slice configuration mapping table; and routing service data to the local network slice to which the service data belongs according to the local network slice and the policy-based routing. Based on this, by mapping the isolation and high reliability of the WAN-side network slice to the LAN-side network, differentiated QoS can be provided for services in the LAN-side network as required in the case of limited resources, such that the services in the LAN-side network exclusively occupy their own network resources, thereby avoiding unsatisfactory QoS caused by resource contention and solving the problem that 5G network slicing technology cannot effectively exert its value according to service requirements on the LAN side.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skill in the art, the term "computer storage medium" includes volatile and nonvolatile, removable and non-removable media implemented in any method or technology for storage of information (such as a computer-readable program, data structures, program modules, or other data). The computer storage medium includes, but not limited to, a RAM, a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes a computer-readable program, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1.  A network access method, comprising:

    acquiring a network slice from a WAN-side network and establishing a link;
    establishing a slice configuration mapping table corresponding to the network slice according to a configuration parameter of the network slice;
    establishing, over a LAN-side network, a local network slice correspondingly linked to the network slice and a policy-based routing according to the slice configuration mapping table; and
    routing service data to the local network slice to which the service data belongs according to the local network slice and the policy-based routing.

2. The method of claim 1, wherein acquiring a network slice from a WAN-side network and establishing a link comprises:

   setting a slice parameter;
   requesting the network slice from the WAN-side network by carrying the slice parameter ; and
   acquiring the network slice corresponding to the slice parameter which are issued by the WAN-side network and the configuration parameter, and establishing the link.

3. The method of claim 2, wherein the slice configuration mapping table comprises a bandwidth parameter and a latency parameter.

4. The method of claim 3, wherein establishing, over a LAN-side network, a local network slice correspondingly linked to the network slice according to the slice configuration mapping table comprises:

   determining a bandwidth of the corresponding local network slice according to the bandwidth parameter corresponding to the network slice in the slice configuration mapping table; and
   determining a priority of the corresponding local network slice according to the latency parameters corresponding to the network slice in the slice configuration mapping table.

5. The method of claim 4, wherein determining a bandwidth of the corresponding local network slice according to the bandwidth parameter corresponding to the network slice in the slice configuration mapping table comprises:

   calculating a sum of bandwidths of a plurality of network slices according to the bandwidth parameter of the network slice in the slice configuration mapping table to obtain a total network slice bandwidth;
   determining a maximum transmission rate with the WAN-side network, and calculating a maximum allocable bandwidth according to the maximum transmission rate; and
   performing bandwidth allocation for the local network slice according to the maximum allocable bandwidth, the bandwidth parameter, and the total network slice bandwidth.

6. The method of claim 5, wherein performing bandwidth allocation for the local network slice according to the maximum allocable bandwidth, the bandwidth parameter, and the total network slice bandwidth comprises:

   in response to the maximum allocable bandwidth being greater than or equal to the total network slice bandwidth, respectively allocating the same bandwidth as bandwidth of the corresponding network slice to the local network slice; and
   in response to the maximum allocable bandwidth being less than the total network slice bandwidth, allocating bandwidth to the local network slice according to the following formula:

$$BW_n' = \frac{BW_n}{BW} M$$

$$BW = BW_1 + BW_2 + BW_3 + \cdots + BW_n$$

   wherein $BW_n'$ represents the bandwidth of the local network slice, $BW_n$ represents the bandwidth of the network slice, $BW$ represents the total network slice bandwidth, and M represents the maximum allocable bandwidth.

7. The method of claim 5, wherein performing bandwidth allocation for the local network slice according to the maximum allocable bandwidth, the bandwidth parameter, and the total network slice bandwidth comprises:

   setting a reserved bandwidth, and calculating a remaining maximum allocable bandwidth according to the reserved bandwidth and the maximum allocable bandwidth;
   in response to the remaining maximum allocable bandwidth being greater than or equal to the total network slice bandwidth, respectively allocating the same bandwidth as bandwidth of the corresponding network slice to the local network slice; and

in response to the remaining maximum allocable bandwidth being less than the total network slice bandwidth, allocating bandwidth to the local network slice according to the following formula:

$$BW_n' = \frac{BW_n}{BW}(M - M_1)$$

$$BW = BW_1 + BW_2 + BW_3 + \cdots + BW_n$$

wherein $BW_n'$ represents the bandwidth of the local network slice, $BW_n$ represents the bandwidth of the network slice, $BW$ represents the total network slice bandwidth, $M_1$ represents the reserved bandwidth, and $M$ represents the maximum allocable bandwidth.

8. The method according to claim 6 or 7, wherein routing service data to the local network slice to which the service data belongs according to the local network slice and the policy-based routing comprises:

determining the network slice to which the service data belongs according to the bandwidth parameter in the slice configuration mapping table;
determining the local network slice corresponding to the service data according to a link relationship between the network slice and the local network slice;
determining a forwarding priority of the service data according to the latency parameter in the slice configuration mapping table; and
routing the service data to the corresponding local network slice according to the forwarding priority of the service data and the corresponding local network slice.

9. The method of any one of claims 2 to 7, wherein acquiring the network slice corresponding to the slice parameter which is issued by the WAN-side network and the configuration parameter, and establishing the link comprises:
in response to sending of the configuration parameter of a new slice by the WAN-side network, updating the corresponding configuration parameter in the slice configuration mapping table.

10. A network access apparatus, comprising:

a WAN module configured for connecting to a WAN-side network to acquire a network slice and establish a link;
a slice configuration mapping module configured for establishing a slice configuration mapping table corresponding to the network slice;
a LAN module configured for establishing, over a LAN-side network, a local network slice correspondingly linked to the network slice according to the slice configuration mapping table; and
a policy-based routing module configured for routing service data to the local network slice to which the service data belongs according to the slice configuration mapping table.

11. An electronic device, comprising: a memory, a processor, and a computer program stored in the memory and executable by the processor, wherein the computer program, when executed by the processor, causes the processor to perform the network access method of any of claims 1 to 9.

12. A computer-readable storage medium, storing a computer-executable program which, when executed by a computer, causes the computer to perform the network access method of any of claims 1 to 9.

Acquire a network slice from a WAN-side network and establish a link —— S100

Establish a slice configuration mapping table corresponding to the network slice according to configuration parameter of the network slice —— S200

Establish, over a LAN-side network, a local network slice correspondingly linked to the network slice and a policy-based routing according to the slice configuration mapping table —— S300

Route service data to the local network slice to which the service data belongs according to the local network slice and the policy-based routing —— S400

FIG. 1

**5G CPE**

WAN-side network slices

LAN-side local network slices

5G network

| Network slice 1 | ➡ | Local network slice 1 | ⇔ | Service data 1 |

| Network slice 2 | ➡ | Local network slice 2 | ⇔ | Service data 2 |

| Network slice 3 | ➡ | Local network slice 3 | ⇔ | Service data 3 |

FIG. 2

Set a slice parameter — S110

Request the network slice from the WAN-side network by carrying the slice parameter — S120

Acquire the network slice corresponding to the slice parameter that is issued by the WAN-side network and the configuration parameter, and establish the link — S130

FIG. 3

Determine a bandwidth of the corresponding local network slice according to the bandwidth parameter corresponding to the network slice in the slice configuration mapping table — S310

Determine priority of the corresponding local network slice according to the latency parameter corresponding to the network slice in the slice configuration mapping table — S320

FIG. 4

Calculate a sum of bandwidths of a plurality of network slices according to the bandwidth parameter of the network slice in the slice configuration mapping table to obtain a total network slice bandwidth — S311

Determine a maximum transmission rate with the WAN-side network, and calculate a maximum allocable bandwidth according to the maximum transmission rate — S312

Perform bandwidth allocation for the local network slice according to the maximum allocable bandwidth, the bandwidth parameter, and the total network slice bandwidth — S313

FIG. 5

When the maximum allocable bandwidth is greater than or equal to the total network slice bandwidth, respectively allocate the same bandwidth as a bandwidth of the corresponding network slice to the local network slice

S3131

When the maximum allocable bandwidth is less than the total network slice bandwidth, allocate bandwidth to the local network slice according to the following formula:

$$BW_n' = \frac{BW_n}{BW} M$$

$$BW = BW_1 + BW_2 + BW_3 + \cdots + BW_n$$

where $BW_n'$ represents the bandwidth of the local network slice, $BW_n$ represents the bandwidth of the network slice, $BW$ represents the total network slice bandwidth, and $M$ represents the maximum allocable bandwidth

S3132

FIG. 6

Set a reserved bandwidth, and calculate a remaining maximum allocable bandwidth according to the reserved bandwidth and the maximum allocable bandwidth — S3133

When the remaining maximum allocable bandwidth is greater than or equal to the total network slice bandwidth, respectively allocate the same bandwidth as a bandwidth of the corresponding network slice to the local network slice — S3134

When the remaining maximum allocable bandwidth is less than the total network slice bandwidth, allocate bandwidth to the local network slice according to the following formula:

$$BW_n' = \frac{BW_n}{BW}(M - M_1)$$

$$BW = BW_1 + BW_2 + BW_3 + \cdots + BW_n$$

where $BW_n'$ represents the bandwidth of the local network slice, $BW_n$ represents the bandwidth of the network slice, $BW$ represents the total network slice bandwidth, and $M$ represents the maximum allocable bandwidth — S3135

FIG. 7

Determine the network slice to which the service data belongs according to the bandwidth parameter in the slice configuration mapping table ⎯⎯∿⎯⎯ S410

Determine the local network slice corresponding to the service data according to a link relationship between the network slice and the local network slice ⎯⎯∿⎯⎯ S420

Determine a forwarding priority of the service data according to the latency parameter in the slice configuration mapping table ⎯⎯∿⎯⎯ S430

Route the service data to the corresponding local network slice according to the forwarding priority of the service data and the corresponding local network slice ⎯⎯∿⎯⎯ S440

FIG. 8

FIG. 9

FIG. 10

## INTERNATIONAL SEARCH REPORT

International application No.

**PCT/CN2023/077429**

**A. CLASSIFICATION OF SUBJECT MATTER**

H04W48/08(2009.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, CNKI, WPABS, VEN, ENTXT, 3GPP: 网络, 切片, 内网, 局域网, LAN, 广域网, WAN, 映射, 配置, 参数, 业务, 策略, network, slice, mapping, configuration, parameter, policy

**C. DOCUMENTS CONSIDERED TO BE RELEVANT**

| Category* | Citation of document, with indication, where appropriate, of the relevant passages | Relevant to claim No. |
|---|---|---|
| X | CN 112019428 A (CHENGDU SKSPRUCE TECHNOLOGY, INC.) 01 December 2020 (2020-12-01) description, paragraphs [0040]-[0054], and figures 1-4 | 1-3, 9-12 |
| A | CN 112019428 A (CHENGDU SKSPRUCE TECHNOLOGY, INC.) 01 December 2020 (2020-12-01) entire document | 4-8 |
| X | US 2021219354 A1 (QUALCOMM INC.) 15 July 2021 (2021-07-15) description, paragraphs [0046]-[0099], and figures 1-5 | 1-3, 9-12 |
| A | US 2021219354 A1 (QUALCOMM INC.) 15 July 2021 (2021-07-15) entire document | 4-8 |
| A | CN 114501593 A (XI'AN FIBOCOM WIRELESS SOFTWARE CO., LTD.) 13 May 2022 (2022-05-13) entire document | 1-12 |
| A | CN 113993167 A (HONOR TERMINAL CO., LTD.) 28 January 2022 (2022-01-28) entire document | 1-12 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 May 2023** | **30 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/077429**

| Patent document cited in search report | | | Publication date (day/month/year) | Patent family member(s) | | | Publication date (day/month/year) |
|---|---|---|---|---|---|---|---|
| CN | 112019428 | A | 01 December 2020 | None | | | |
| US | 2021219354 | A1 | 15 July 2021 | EP | 4091366 | A1 | 23 November 2022 |
| | | | | WO | 2021146018 | A1 | 22 July 2021 |
| | | | | US | 2022264666 | A1 | 18 August 2022 |
| | | | | US | 11240855 | B2 | 01 February 2022 |
| | | | | CN | 114930917 | A | 19 August 2022 |
| CN | 114501593 | A | 13 May 2022 | None | | | |
| CN | 113993167 | A | 28 January 2022 | None | | | |

Form PCT/ISA/210 (patent family annex) (July 2022)

**EP 4 546 875 A1**

**REFERENCES CITED IN THE DESCRIPTION**

**Patent documents cited in the description**

- CN 202210843123